# EUROPEAN PATENT APPLICATION

(11) **EP 4 080 635 A1**
(43) Date of publication of application: **26.10.2022**
(21) Application number: 20901662.5
(22) Date of filing: 15.12.2020
(51) Int. Cl.: H01M 10/0567

(54) **SECONDARY BATTERY**

(30) Priority: 17.12.2019 CN 201911299389
(71) Applicant: Zhangjiagang Guotai-Huarong New Chemical Materials Co., Ltd, Suzhou, Jiangsu 215600 (CN)
(72) Inventor: CHEN, Xiaoqin, Suzhou, Jiangsu 215600 (CN); LU, Xiaofeng, Suzhou, Jiangsu 215600 (CN); QIN, Hu, Suzhou, Jiangsu 215600 (CN); GAN, Chaolun, Suzhou, Jiangsu 215600 (CN)
(74) Representative: Bryers LLP
(86) International application number: PCT/CN2020/136483
(87) International publication number: WO 2021/121222

(57) **Abstract**

Disclosed is a secondary battery, comprising a positive electrode, a negative electrode, and an electrolyte, wherein the electrolyte comprises a lithium salt, an organic solvent, and an additive, wherein the additive comprises a fluorinated compound that accounts for 5-20% of the total mass of the electrolyte, and a polynitrile compound that accounts for 0.2-4% of the total mass of the electrolyte and a sulfate compound that accounts for 0.3-5% of the total mass of the electrolyte; and the negative electrode has a compacted density of not less than 1.55 g/cm3. When the secondary battery is used, the battery can still have both a high temperature characteristic and a low temperature charging ability under the conditions of a higher negative electrode density, thereby having market application prospects, and overcoming the problem of the performance of existing secondary batteries deteriorating when the compacted density of a negative electrode is improved.

## Description

### Technical Field of the Invention

The present disclosure belongs to the field of electrochemical techniques, in particular, relates to a secondary battery.

### Background of the Invention

In recent years, the popularization of portable electronic devices such as mobile phones, tablet computers, notebook computers and the like has promoted the development of high-energy-density secondary batteries. Among the many secondary batteries, the lithium-ion secondary batteries that realize energy conversion by the intercalation and deintercalation of lithium ions have a higher energy density than lead-acid batteries and nickel-hydrogen batteries, and have developed particularly rapidly since its introduction, its application fields cover digital products, power tools, electric vehicles, communication base stations and grid energy storage, etc..

The secondary battery mainly includes a positive electrode, a negative electrode, a separator, and an electrolyte. As the medium of the charge and discharge reaction, the electrolyte has an important influence on the performance of the secondary batteries. In recent years, the technology of lithium-ion secondary batteries has been continuously innovated, pursuing a balance between high energy density and high performance. For example, the battery of unmanned aerial vehicles requires excellent cycle performance, power characteristics, high-temperature storage characteristics, low-temperature fast charging capabilities, etc., which is difficult to develop. In many application fields, people expect the battery to occupy a smaller volume in order to achieve portability or functional diversification of terminal equipment. By increasing the density of the pole pieces of the positive and negative electrodes of the battery (also called compaction density), the volumetric energy density of the battery may be increased.

In order to achieve a higher volumetric energy density of the battery, the material design and battery manufacturing process optimization are generally used to increase the active material load of the positive and negative electrodes, for example, by increasing the compaction density of the pole pieces of the positive and negative electrodes, the battery can achieve higher capacity (energy) under a certain volume. However, as the active material load in the electrodes increases, the power characteristics and charging ability of the battery will deteriorate. Among them, an increase in the active material load of the negative electrode will result in a decrease in the charging capacity of the battery. For commercial lithium-ion batteries, the density of the negative electrode other than the current collector (referred to as compaction density of the negative electrode) is generally 1.45 - 1.65 g/cm³. Under the condition of higher compaction density of the negative electrode, it is rather difficult to make the battery have better charging ability.

When using LiCoO₂ or LiNiₓCo_{y}Mn_{1-x-y}O₂ as the positive electrode active material, in order to obtain a higher battery capacity, sometimes the charge cut-off voltage is set to 4.4 V or even higher, in this high voltage environment, the oxidation of the positive electrode material increases, the electrolyte is prone to oxidative decomposition on the positive electrode side; at the same time, transition metal ions will dissolve out, reduce and deposit on the negative electrode side, hindering the migration of lithium ions. Therefore, the protection of the positive electrode surface of the battery under high voltage is particularly important.

In practical applications, in order to make the battery have better high-temperature characteristics, a higher dose of film-forming additives (such as 1,3-propane sultone) will be added to the electrolyte. A problem that ensues is that the charging capability of the battery decreases, and this problem is especially obvious in low temperature conditions. An easy way to judge the charging capability is to observe the condition of the negative electrode interface. After the battery is fully charged, if there is white attachment on the negative electrode interface, it is called "lithium plating". Lithium plating in the negative electrode will lead to accelerated deterioration of battery performance.

For lithium-ion batteries with higher negative electrode density, it is very difficult to balance high temperature characteristics and low temperature charging capabilities.

### Summary of the Invention

The technical problem to be solved by the present application is to provide a secondary battery with a high negative electrode density, which has excellent high temperature characteristics and low temperature charging capabilities.

To achieve the above purpose, the technical solution employed by the present disclosure is:
A purpose of the present disclosure is to provide a secondary battery, where it comprises a positive electrode, a negative electrode and an electrolyte, the electrolyte comprises a lithium salt, an organic solvent and additives, the additives comprise a fluorinated compound that accounts for 5 to 20% of the total mass of the electrolyte, a polynitrile compound that accounts for 0.2 to 4% of the total mass of the electrolyte, and a sulfate compound that accounts for 0.3 to 5% of the total mass of the electrolyte, and the compaction density of the negative electrode is not less than 1.55 g/cm³.

Preferably, the fluorinated compound is selected from the group consisting of fluorocarbonate, fluorocarboxylate, fluoroether, fluorophosphate, fluorophosphite, and combinations thereof.

Further preferably, the fluorocarbonate is selected from the group consisting of fluoroethylene carbonate, difluoroethylene carbonate, methyl trifluoroethyl carbonate, and combinations thereof.

Further preferably, the fluorocarboxylate is selected from the group consisting of 2,2-difluoroethyl acetate, 2,2,2-trifluoroethyl acetate, ethyl trifluoroacetate, 2,2,2-trifluoroethyl trifluoroacetate, methyl trifluoropropionate, ethyl 3,3-difluoropropionate, ethyl 2,2,3,3-tetrafluoropropionate, 2,2,2-trifluoroethyl propionate, 2,2,2-trifluoroethyl n-butyrate, and combinations thereof.

Further preferably, the fluoroether is selected from the group consisting of 1,1,2,2-tetrafluoroethyl-2,2,3,3-tetrafluoropropyl ether, 2,2,2-trifluoroethyl-1,1,2,3,3,3-hexafluoropropyl ether, 1,1,2,2-tetrafluoroethyl-2,2,2-trifluoroethyl ether, perfluorobutyl ethyl ether, perfluorobutyl methyl ether, heptafluoropropyl trifluorovinyl ether, and combinations thereof.

Further preferably, the fluorophosphate is selected from the group consisting of tris(2,2,2-trifluoroethyl) phosphate and/or tris(1,1,1,3,3,3-hexafluoroisopropyl) phosphate.

Further preferably, the fluorophosphite is selected from the group consisting of tris(2,2,2-trifluoroethyl) phosphite and/or tris(1,1,1,3,3,3-hexafluoro-2-propyl) phosphite.

Preferably, the polynitrile compound contains three or more cyano groups.

Further preferably, the polynitrile compound is selected from the group consisting of 1,2,3-propanetricarbonitrile, 1,3,5-pentanetricarbonitrile, 1,3,6-hexanetricarbonitrile, 1,3,5-cyclohexanetricarbonitrile, 1,2,3-tris (2-cyanoethoxy) propane and combinations thereof.

Preferably, the sulfate compound is selected from the group consisting of ethylene sulfate, propylene sulfate, bis(trimethylsilyl) sulfate, bis(triethylsilyl) sulfate, and combinations thereof.

Preferably, the lithium salt is selected from the group consisting of lithium hexafluorophosphate, lithium tetrafluoroborate, lithium hexafluoroarsenate, anhydrous lithium perchlorate, lithium bis(trifluoromethylsulfonyl)imide, lithium trifluoromethanesulfonate, lithium bis(oxalate) borate, lithium monooxalate difluoroborate, lithium bis(fluorosulfonyl)imide, and combinations thereof.

Preferably, the organic solvent is selected from the group consisting of ethylene carbonate, propylene carbonate, γ-butyrolactone, dimethyl carbonate, diethyl carbonate, ethyl methyl carbonate, methyl propyl carbonate, methyl propionate, ethyl propionate, propyl propionate, methyl acetate, ethyl acetate, propyl acetate, methyl butyrate, ethyl butyrate, propyl butyrate, sulfolane, diethylene glycol dimethyl ether, triethylene glycol dimethyl ether, and combinations thereof.

Preferably, the mass of the lithium salt is 10 to 20 % of the total mass of the electrolyte.

Preferably, the compaction density of the negative electrode is between 1.55 g/cm³ and 1.75 g/cm³.

Further preferably, the compaction density of the negative electrode is not less than 1.6 g/cm³.

Preferably, both the positive electrode and the negative electrode are able to absorb and desorb lithium ions.

Further preferably, the positive electrode contains a positive electrode active material, and the positive electrode active material is selected from the group consisting of LiCoO₂, LiNiₓCo_{y}Mn_{1-x-y}O₂, LiNi_{y}Co_{y}Al_{1-x-y}O₂, and combinations thereof.

Further preferably, the negative electrode contains a negative electrode active material, and the negative electrode active material is carbon material or/and silicon material.

More preferably, the carbon material is selected from the group consisting of artificial graphite and/or natural graphite; the silicon material is selected from the group consisting of silicon-carbon composites, silicon-oxygen-carbon composites, silicon-lithium composites, and combinations thereof.

Due to the use of the above technical solutions, the present disclosure has the following advantages over the prior art:
The present disclosure uses fluorinated compounds with excellent oxidation resistance, low-impedance film-forming additives sulfates, and polynitrile compounds with positive electrode protection as the core components of the electrolyte, and optimizes the design of the electrolyte, so that the battery can still take into account high-temperature characteristics and low-temperature charging ability under the condition of relatively high negative electrode density.

### Detailed Description of Exemplary Embodiments

In the following, this application is further explained in detail combining with embodiments, but this application should not be limited to these embodiments. Unless otherwise specified herein, "%" means mass percentage.

### Embodiment 1:

### [Manufacture of positive electrode]

LiCoO₂, conductive carbon black and PVDF were weighed according to a mass ratio of 90: 5: 5, and an appropriate amount of NMP was added thereto, followed by thorough stirring to give a positive electrode slurry. The positive electrode slurry was coated on an aluminum foil, dried, and then rolled and cut to obtain a positive electrode. The density of the positive electrode other than the current collector (referred to as compaction density of the positive electrode) was 4.15 g/cm³.

### [Manufacture of negative electrode]

Graphite, styrene-butadiene rubber and carboxymethylcellulose were weighed according to a mass ratio of 95: 3: 2, and an appropriate amount of deionized water was added thereto, followed by thorough stirring to give a negative electrode slurry. The negative electrode slurry was coated on a copper foil, dried, and then rolled and cut to obtain a negative electrode. The density of the negative electrode other than the current collector (referred to as compaction density of the negative electrode) was 1.65 g/cm³.

### [Preparation of electrolyte]

Ethylene carbonate (EC), diethyl carbonate (DEC) and ethyl propionate (EP) were mixed according to a mass ratio of 30: 35: 35 to obtain a mixed solvent, and the charging amounts of the mixed solvent, lithium hexafluorophosphate and the additives were calculated according to a mass ratio of (85-a): 15:a.

77.5 parts of mixed solvent, 15 parts of lithium hexafluorophosphate, and 7.5 parts of additives were taken, where the composition of the additives were 5 parts of FEC, 2 parts of 1,3,6-hexanetricarbonitrile (HTN) and 0.5 parts of ethylene sulfate (ESA) to prepare an electrolyte.

### [Manufacture of battery]

The above positive electrode, negative electrode, and electrolyte were used, a PE separator having a thickness of 20 µm was selected, and a soft pack battery was manufactured by a winding process, and its model number was 053048.

### [Battery performance test]

The battery was formed at a rate of 0.1 C, degassed and sealed; then charged and discharged at a rate of 0.2 C for 1 cycle (the voltage range was 3.0 to 4.45 V, the same below).

The high-temperature storage performance test was to first charge the battery at a constant current of 0.5 C to 4.45V at 25 °C, charge at a constant voltage until the current drops to 0.05 C, and then store the battery in an oven at 60 °C for 14 days. The internal resistances of the battery (full charge state) before and after storage were tested. Internal resistance change rate = [(internal resistance after storage - internal resistance before storage) / internal resistance before storage] ^{∗} 100%.

The high-temperature cyclic performance test was to charge and discharge the battery at a rate of 0.7 C for 400 cycles at 50 °C, and calculate the capacity retention rate. Capacity retention rate = (400-cycle discharge capacity/first-cycle discharge capacity)^{∗}100%.

The low-temperature charge capability test was to charge the battery at a constant current of 0.2 C to 4.45V at -5°C, and then charge at a constant voltage until the current drops to 0.05 C. After leaving the battery at room temperature for half an hour, it was disassembled in a drying room to observe the condition of the negative electrode interface.

Embodiments 2 to 23, and Comparative examples 1 to 8:
The battery was manufactured in the same manner as in Embodiment 1, except for the change in the additives of the electrolyte and the compaction density of the negative electrode. The battery performance tests were performed in the same manner as in Embodiment 1.

See Table 1 for the additives, addition amounts, the compaction densities of the negative electrodes and the test results of high-temperature performance of the batteries of Embodiments 1-23 and Comparative Examples 1 - 8.

Wherein, fluoroethylene carbonate is abbreviated as FEC, 1,1,2,2-tetrafluoroethyl-2,2,3,3-tetrafluoropropyl ether is abbreviated as FE1, 1,3,6-hexanetricarbonitrile is abbreviated as HTN, ethylene sulfate is abbreviated as ESA, propylene sulfate is abbreviated as PSA, 1,3-propane sultone is abbreviated as PS, ethyl trifluoroacetate is abbreviated as ETFA, tris(2,2,2-trifluoroethyl) phosphate is abbreviated as TTFP, tris(2,2,2-trifluoroethyl) phosphite is abbreviated as TTFPI, bis(trimethylsilyl) sulfate is abbreviated as BTMS, bis(triethylsilyl) sulfate is abbreviated as BTES, 1,3,5-cyclohexanetricarbonitrile is abbreviated as CHTCN, and 1,2,3-tris (2-cyanoethoxy) propane is abbreviated as TCEP.

**Table 1**

| | Additives | Additive amount (wt%) | Compaction densities of negative electrode (g/cm³) | Change rate of internal resistance (%) | Capacity retention rate after 400 cycles of circulation (%) |
|---|---|---|---|---|---|
| Embodiment 1 | FEC+HTN+ESA | 5+2+0.5 | 1.65 | 14.6 | 78 |
| Embodiment 2 | FEC+HTN+ESA | 5+2+1.5 | 1.65 | 12.4 | 83 |
| Embodiment 3 | FEC+HTN+ESA | 5+2+3 | 1.65 | 10.2 | 84 |
| Embodiment 4 | FEC+HTN+ESA | 5+2+5 | 1.65 | 15.6 | 85 |
| Embodiment 5 | FEC+HTN+ESA | 5+4+1.5 | 1.65 | 10.7 | 86 |
| Embodiment 6 | FEC+HTN+PSA | 5+2+3 | 1.65 | 13.1 | 81 |
| Embodiment 7 | FEC+HTN+PSA | 5+3+2 | 1.65 | 9.8 | 83 |
| Embodiment 8 | FE1+HTN+ESA | 5+2+1.5 | 1.65 | 14.9 | 77 |
| Embodiment 9 | FE1+HTN+ESA | 10+2+1.5 | 1.65 | 12.3 | 79 |
| Embodiment 10 | FEC+FE1+HTN+ESA | 3+5+2+1.5 | 1.65 | 10.7 | 81 |
| Embodiment 11 | FEC+FE1+HTN+ESA | 5+5+2+1.5 | 1.65 | 8.5 | 87 |
| Embodiment 12 | FEC+FE1+HTN+ESA | 8+5+2+1.5 | 1.65 | 14.6 | 88 |
| Embodiment 13 | FEC+FE1+HTN+ESA | 5+12+1+1 | 1.65 | 11.3 | 89 |
| Embodiment 14 | FEC+ETFA+CHTCN+ESA | 5+4+2+0.5 | 1.60 | 10.2 | 89 |
| Embodiment 15 | FEC+ETFA+TCEP+BTMS | 5+5+2+3 | 1.60 | 10.6 | 88 |
| Embodiment 16 | FEC+TTFP+TCEP+BTMS | 4+3+2+3 | 1.60 | 11.0 | 89 |
| Embodiment 17 | FEC+TTFPI+CHTCN+BTES | 3+3+1+4 | 1.55 | 12.3 | 91 |
| Embodiment 18 | FEC+HTN+ESA | 5+2+5 | 1.55 | 9.4 | 90 |
| Embodiment 19 | FEC+HTN+PSA | 5+2+3 | 1.55 | 11.8 | 85 |
| Embodiment 20 | FEC+HTN+ESA | 5+2+0.5 | 1.70 | 16.7 | 75 |
| Embodiment 21 | FEC+FE1+HTN+ESA | 3+5+2+1.5 | 1.70 | 14.0 | 78 |
| Embodiment 22 | FEC+HTN+ESA | 5+2+0.5 | 1.75 | 19.6 | 70 |
| Embodiment 23 | FEC+FE1+HTN+ESA | 3+5+2+1.5 | 1.75 | 18.1 | 73 |
| Comparative Example 1 | FEC+PS | 5+3 | 1.65 | 34.2 | 53 |
| Comparative Example 2 | FEC+PS | 5+4 | 1.65 | 39.7 | 55 |
| Comparative Example 3 | FEC+PS | 5+4 | 1.60 | 38.8 | 56 |
| Comparative Example 4 | FEC+PS | 5+4 | 1.55 | 32.3 | 60 |
| Comparative Example 5 | FEC+PS | 5+3 | 1.55 | 30.8 | 59 |
| Comparative Example 6 | FEC+PS | 5+3 | 1.50 | 28.5 | 62 |
| Comparative Example 7 | FEC+PS | 5+3 | 1.70 | 37.4 | 48 |
| Comparative Example 8 | FEC+PS | 5+3 | 1.75 | 44.9 | 40 |

The data of the internal resistance change rate and capacity retention rate of the batteries of the embodiments and comparative examples in Table 1 shows that when using the same composition of electrolyte, the increase in the compaction density of the negative electrode will result in a higher internal resistance change rate after high-temperature storage and a worse capacity retention rate of the batteries; under the condition of higher compaction density of the negative electrode (≥ 1.55 g/cm³), using fluorinated compounds, polynitrile compounds and sulfates as additives and optimizing the combinations, the internal resistance change rate of the battery after high-temperature storage can be lower, and the capacity retention rate of the battery after high-temperature cycling is higher, that is, the high-temperature characteristics of the battery are improved.

The conditions of the negative electrode interfaces of the batteries of Embodiments 1 to 23 and Comparative Examples 1 to 8 after low-temperature charging are shown in Table 2. The condition of the negative electrode interface is divided into four situations: no lithium plating, slight lithium plating, moderate lithium plating, and severe lithium plating, wherein, no lithium plating means that the negative electrode interface is uniform golden yellow, slight lithium plating means that there are white or gray spot-like attachments on the interface (and the distribution area does not exceed 10 % of the coated area), moderate lithium plating means that 10 - 30 % of the area on the interface has white or gray attachments, and severe lithium plating means more than 30 % of the area on the interface has white or gray attachments. No lithium plating indicates that the battery has excellent charging ability, and the more severe the degree of lithium plating, the worse the low-temperature charging ability.

**Table 2**

| | State of negative electrode interface | | State of negative electrode interface | | State of negative electrode interface |
|---|---|---|---|---|---|
| Embodiment 1 | No lithium plating | Embodiment 12 | Slight lithium plating | Embodiment 23 | Slight lithium plating |
| Embodiment 2 | No lithium plating | Embodiment 13 | No lithium plating | Comparative Example 1 | Moderate lithium plating |
| Embodiment 3 | No lithium plating | Embodiment 14 | No lithium plating | Comparative Example 2 | Severe lithium plating |
| Embodiment 4 | Slight lithium plating | Embodiment 15 | No lithium plating | Comparative Example 3 | Severe lithium plating |
| Embodiment 5 | No lithium plating | Embodiment 16 | No lithium plating | Comparative Example 4 | Moderate lithium plating |
| Embodiment 6 | Slight lithium plating | Embodiment 17 | No lithium plating | Comparative Example 5 | Slight lithium plating |
| Embodiment 7 | No lithium plating | Embodiment 18 | No lithium plating | Comparative Example 6 | No lithium plating |
| Embodiment 8 | No lithium plating | Embodiment 19 | No lithium plating | Comparative Example 7 | Severe lithium plating |
| Embodiment 9 | No lithium plating | Embodiment 20 | Slight lithium plating | Comparative Example 8 | No lithium plating |
| Embodiment 10 | No lithium plating | Embodiment 21 | Slight lithium plating | | |
| Embodiment 11 | No lithium plating | Embodiment 22 | Slight lithium plating | | |

The conditions of the negative electrode interfaces of the batteries of the embodiments and comparative examples in Table 2 indicate that when using the same components of the electrolyte, the increase in the compaction density of the negative electrode will result in that lithium plating is more prone to occur in the negative electrode of the battery; under the same compaction density of the negative electrode, the increase in the content of the film-forming additive will cause lithium plating is more prone to occur in the negative electrode of the battery; after using fluorinated compounds, polynitrile compounds and sulfates as additives and optimizing the combinations, it can enable lithium plating not to occur in the negative electrode under the condition of higher compaction density of the negative electrode (≥1.55 g/cm³), that is, the low-temperature charging ability of the battery has been improved.

It can be seen from Table 1 and Table 2 that the battery of the present disclosure can still take into account good high-temperature characteristics and low-temperature charging ability under the condition of a higher compaction density of the negative electrode.

The embodiments described above are only for illustrating the technical concepts and features of the present disclosure, and are intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

## Claims

1. A secondary battery, comprising a positive electrode, a negative electrode and an electrolyte, the electrolyte comprising a lithium salt, an organic solvent and additives, is **characterized in that**, the additives comprise a fluorinated compound that accounts for 5 to 20% of the total mass of the electrolyte, a polynitrile compound that accounts for 0.2 to 4% of the total mass of the electrolyte, and a sulfate compound that accounts for 0.3 to 5% of the total mass of the electrolyte, and the compaction density of the negative electrode is not less than 1.55 g/cm³.

2. The secondary battery according to claim 1, is **characterized in that**, the fluorinated compound is selected from the group consisting of fluorocarbonate, fluorocarboxylate, fluoroether, fluorophosphate, fluorophosphite, and combinations thereof.

3. The secondary battery according to claim 2, is **characterized in that**, the fluorocarbonate is selected from the group consisting of fluoroethylene carbonate, difluoroethylene carbonate, methyl trifluoroethyl carbonate, and combinations thereof; and/or,
the fluorocarboxylate is selected from the group consisting of 2,2-difluoroethyl acetate, 2,2,2-trifluoroethyl acetate, ethyl trifluoroacetate, 2,2,2-trifluoroethyl trifluoroacetate, methyl trifluoropropionate, ethyl 3,3-difluoropropionate, ethyl 2,2,3,3-tetrafluoropropionate, 2,2,2-trifluoroethyl propionate, 2,2,2-trifluoroethyl n-butyrate, and combinations thereof; and/or,
the fluoroether is selected from the group consisting of 1,1,2,2-tetrafluoroethyl-2,2,3,3-tetrafluoropropyl ether, 2,2,2-trifluoroethyl-1,1,2,3,3,3-hexafluoropropyl ether, 1,1,2,2-tetrafluoroethyl-2,2,2-trifluoroethyl ether, perfluorobutyl ethyl ether, perfluorobutyl methyl ether, heptafluoropropyl trifluorovinyl ether, and combinations thereof; and/or,
the fluorophosphate is selected from the group consisting of tris(2,2,2-trifluoroethyl) phosphate and/or tris(1,1,1,3,3,3-hexafluoroisopropyl) phosphate; and/or,
the fluorophosphate is selected from the group consisting of tris(2,2,2-trifluoroethyl) phosphite and/or tris(1,1,1,3,3,3-hexafluoroisopropyl) phosphite.

4. The secondary battery according to claim 1, is **characterized in that**, the polynitrile compound contains three or more cyano groups.

5. The secondary battery according to claim 4, is **characterized in that**, the polynitrile compound is selected from the group consisting of 1,2,3-propanetricarbonitrile, 1,3,5-pentanetricarbonitrile, 1,3,6-hexanetricarbonitrile, 1,3,5-cyclohexanetricarbonitrile, 1,2,3-tris (2-cyanoethoxy) propane and combinations thereof.

6. The secondary battery according to claim 1, is **characterized in that**, the sulfate compound is selected from the group consisting of ethylene sulfate, propylene sulfate, bis(trimethylsilyl) sulfate, bis(triethylsilyl) sulfate, and combinations thereof.

7. The secondary battery according to claim 1, is **characterized in that**, the lithium salt is selected from the group consisting of lithium hexafluorophosphate, lithium tetrafluoroborate, lithium hexafluoroarsenate, anhydrous lithium perchlorate, lithium bis(trifluoromethylsulfonyl)imide, lithium trifluoromethanesulfonate, lithium bis(oxalate) borate, lithium monooxalate difluoroborate, lithium bis(fluorosulfonyl)imide, and combinations thereof.

8. The secondary battery according to claim 1 or 7, is **characterized in that**, the mass of the lithium salt is 10 to 20 % of the total mass of the electrolyte.

9. The secondary battery according to claim 1, is **characterized in that**, the organic solvent is selected from the group consisting of ethylene carbonate, propylene carbonate, γ-butyrolactone, dimethyl carbonate, diethyl carbonate, ethyl methyl carbonate, methyl propyl carbonate, methyl propionate, ethyl propionate, propyl propionate, methyl acetate, ethyl acetate, propyl acetate, methyl butyrate, ethyl butyrate, propyl butyrate, sulfolane, diethylene glycol dimethyl ether, triethylene glycol dimethyl ether, and combinations thereof.

10. The secondary battery according to claim 1, is **characterized in that**, the compaction density of the negative electrode is 1.55 g/cm³ or higher, and 1.75 g/cm³ or lower.

11. The secondary battery according to claim 1 or 10, is **characterized in that**, the compaction density of the negative electrode is not less than 1.6 g/cm³.

12. The secondary battery according to claim 1, is **characterized in that**, both the positive electrode and the negative electrode are able to absorb and desorb lithium ions.

13. The secondary battery according to claim 12, is **characterized in that**, the positive electrode contains a positive electrode active material, and the positive electrode active material is selected from the group consisting of LiCoO₂, LiNiₓCo_{y}Mn_{1-x-y}O₂, LiNiₓCo_{y}Al_{1-x-y}O₂, and combinations thereof.

14. The secondary battery according to claim 12, is **characterized in that**, the negative electrode contains a negative electrode active material, and the negative electrode active material is carbon material or/ and silicon material.

15. The secondary battery according to claim 14, is **characterized in that**, the carbon material is selected from the group consisting of artificial graphite and/or natural graphite; the silicon material is selected from the group consisting of silicon-carbon composites, silicon-oxygen-carbon composites, silicon-lithium composites, and combinations thereof.
